**Europäisches Patentamt**

**European Patent Office**

**Office européen des brevets**

(19)

(11) Numéro de publication : **0 019 521**
**B1**

(12) . **FASCICULE DE BREVET EUROPÉEN**

(45) Date de publication du fascicule du brevet :
09.06.82

(51) Int. Cl.³ : **B 23 K 37/00**

(21) Numéro de dépôt : **80400621.1**

(22) Date de dépôt : **07.05.80**

(54) **Dispositif d'alimentation en produit long de recouvrement d'une installation de revêtement interne de tuyauterie.**

(30) Priorité : **11.05.79 FR 7912009**

(43) Date de publication de la demande :
**26.11.80 (Bulletin 80/24)**

(45) Mention de la délivrance du brevet :
**09.06.82 Bulletin 82/23**

(84) Etats contractants désignés :
**AT BE CH DE GB IT LI NL SE**

(56) Documents cités :
**DE A 2 704 845**
**GB A 1 124 476**
**US A 3 133 184**
**US A 3 661 314**

(73) Titulaire : **Framatome**
**Tour Fiat 1 place de la Coupole**
**F-92400 Courbevoie (FR)**

(72) Inventeur : **Marmorat, André**
**30, rue des Martyrs**
**F-71200 Le Creusot (FR)**
Inventeur : **Robert, Michel-Arnold**
**195 Le Hameau du Lac**
**Torcy F-71210 Montchanin (FR)**

(74) Mandataire : **Bouget, Lucien et al**
**CREUSOT-LOIRE 15 rue Pasquier**
**F-75383 Paris Cedex 08 (FR)**

Imprimerie Jouve, 18, rue St-Denis, 75001 Paris, France

# Dispositif d'alimentation en produit long de recouvrement d'une installation de revêtement interne de tuyauterie

L'invention concerne un dispositif d'alimentation en produit long de recouvrement d'une installation de revêtement interne de tuyauterie ayant un diamètre de 650 à 1 000 mm.

On connaît des installations pour le revêtement interne de tuyauteries en utilisant un matériau d'apport sous forme de produit long, par exemple sous forme d'un feuillard, comportant une tête de soudage qu'on introduit à l'intérieur de la tuyauterie portée par un bras permettant les déplacements de cette tête dans la direction de l'axe de la tuyauterie pour la réalisation d'un revêtement par passes successives au cours desquelles la tuyauterie effectue un tour complet, le produit long amené en continu à la tête de soudage pendant la réalisation d'une passe formant un anneau de revêtement sur la surface interne de la tuyauterie.

En particulier, dans le domaine de l'industrie nucléaire, il est nécessaire de revêtir intérieurement par de l'acier inoxydable, des tuyauteries ou tubulures servant au transport de fluide à haute température et à haute pression, tel que l'eau sous pression du circuit de refroidissement des réacteurs nucléaires à eau ou encore de fluide corrosif.

Pour la fabrication de ces tuyauteries, on utilise des viroles élémentaires en acier faiblement allié qu'on recouvre intérieurement d'acier inoxydable pour les rendre résistantes à la corrosion par l'eau sous pression et à haute température ou par d'autres fluides corrosifs.

Pour la réalisation de ces éléments de tuyauteries, on utilise des installations de revêtement telles que mentionnées ci-dessus dont la tête de soudage est alimentée en continu par du feuillard inoxydable.

Les tuyauteries utilisées dans le domaine de l'industrie nucléaire dont il est nécessaire d'effectuer le recouvrement en acier inoxydable sont généralement d'un diamètre inférieur à 1 mètre, ce qui pose des problèmes en ce qui concerne l'encombrement de la tête de soudage utilisée et du dispositif d'alimentation en feuillard qui lui est associé.

En effet, dans le cas des tuyauteries de très grand diamètre, il est possible de disposer la bobine sur laquelle est enroulé le feuillard de revêtement au-dessus de la tête de soudage, le feuillard pénétrant dans la tête de soudage à la verticale pour son guidage et son entraînement dans la direction verticale jusqu'à la zone de soudage à la partie la plus basse de la canalisation à revêtir mise en rotation autour de son axe.

Dans le cas de canalisations de diamètres inférieurs à 1 mètre, il n'est plus possible d'adopter une disposition de la bobine de feuillard au-dessus de la tête de soudage et l'on a alors recours à une disposition de cette bobine sur la partie du bras restant à l'extérieur de la tuyauterie lors de l'opération de revêtement, le feuillard effectuant un cheminement depuis la bobine jusqu'à la buse de soudage le long du bras horizontal ou parallèlement à ce bras.

Ce cheminement effectué sur toute la longueur du bras ou sur une partie importante de cette longueur suppose un guidage du feuillard sur tout son parcours par des galets qui peuvent entraîner des déformations ou des cassures du produit long au cours de son transport.

Lorsque le produit long subit une rupture, il faut évidemment arrêter l'opération de revêtement pour réengager le produit long dans la tête de soudage. Ceci se fait au détriment de la rapidité d'exécution de l'opération.

D'autre part, lorsque le produit long présente des déformations, celles-ci peuvent entraîner des variations de caractéristiques du dépôt qu'il s'agisse de caractéristiques dimensionnelles, géométriques ou métallurgiques. Dans ce cas, il faudra effectuer des opérations supplémentaires de meulage ou d'usinage après réalisation du dépôt.

Le but de l'invention est donc de proposer un dispositif d'alimentation en produit long de recouvrement, d'une installation de revêtement interne de tuyauterie ayant un diamètre de 650 à 1 000 mm, la tuyauterie étant disposée avec son axe horizontal sur un support permettant sa mise en rotation autour de cet axe, le dispositif comprenant un autre support sur lequel est monté, mobile en translation verticale et horizontale, un bras horizontal dont une extrémité introduite dans la tuyauterie pendant l'opération de revêtement porte une tête de soudage verticale, muni de moyens de guidage et d'entraînement du produit long, dont le trajet dans la tête de soudage a une direction verticale, jusqu'à sa mise en contact avec la surface interne de la tuyauterie pour son soudage sur cette surface, à la partie inférieure de la tuyauterie, lors de la rotation de la tuyauterie autour de son axe horizontal, ce dispositif d'alimentation permettant d'éviter des déformations et des ruptures du produit long, tout en étant d'un encombrement faible à l'intérieur de la tuyauterie.

Dans ce but, le dispositif suivant l'invention comporte :
— une bobine sur laquelle est enroulé le produit long disposé à l'avant de la tête de soudage, c'est-à-dire vers la sortie de la tuyauterie par l'entrée de laquelle est introduite la tête de soudage, la bobine étant montée rotative sur un axe solidaire de l'extrémité avant du bras faisant un angle faible avec l'axe du bras,
— et des moyens réglables de guidage du produit long depuis la zone de la bobine située vers le bas jusqu'à la partie supérieure de la tête de soudage, suivant un parcours adapté à la largeur et à la flexibilité du produit long, se terminant par un trajet vertical pour l'introduction de ce produit long dans le moyen de guidage et d'entraînement associé à la tête de soudage.

Afin de bien faire comprendre l'invention, on va décrire à titre d'exemple non limitatif un mode de réalisation d'un dispositif suivant l'invention, dans le cas d'une canalisation à revêtir par un produit long sous forme d'un feuillard en acier inoxydable.

La figure 1 représente, dans une vue en élévation dans la direction axiale de la canalisation, la tête de soudage et son dispositif d'alimentation en feuillard en position de service à l'intérieur de la tuyauterie, la bobine de produit long étant représentée uniquement par son contour.

La figure 2 représente une vue de dessus de l'extrémité du bras de l'installation de revêtement, suivant A de la figure 1.

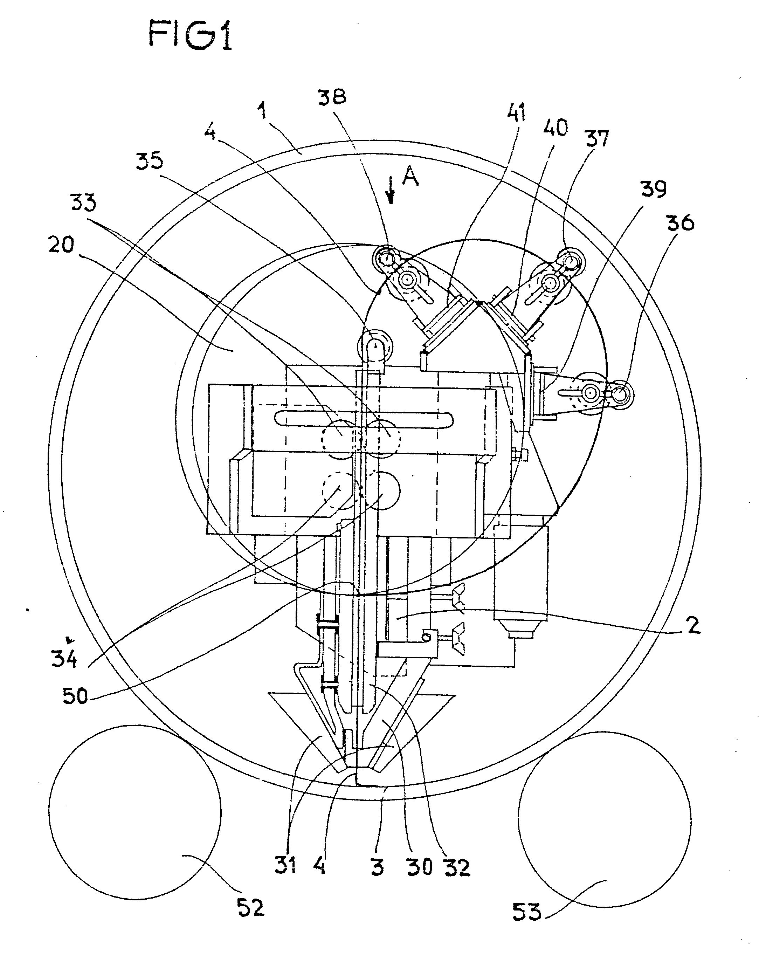

On voit sur la figure 1, la tuyauterie 1 à l'intérieur de laquelle est disposée la tête de soudage 2 réalisant l'amenée au contact de la surface intérieure 3 de la canalisation, d'un produit long sous forme d'un feuillard 4 en acier inoxydable et sa fixation par soudage sur la surface 3.

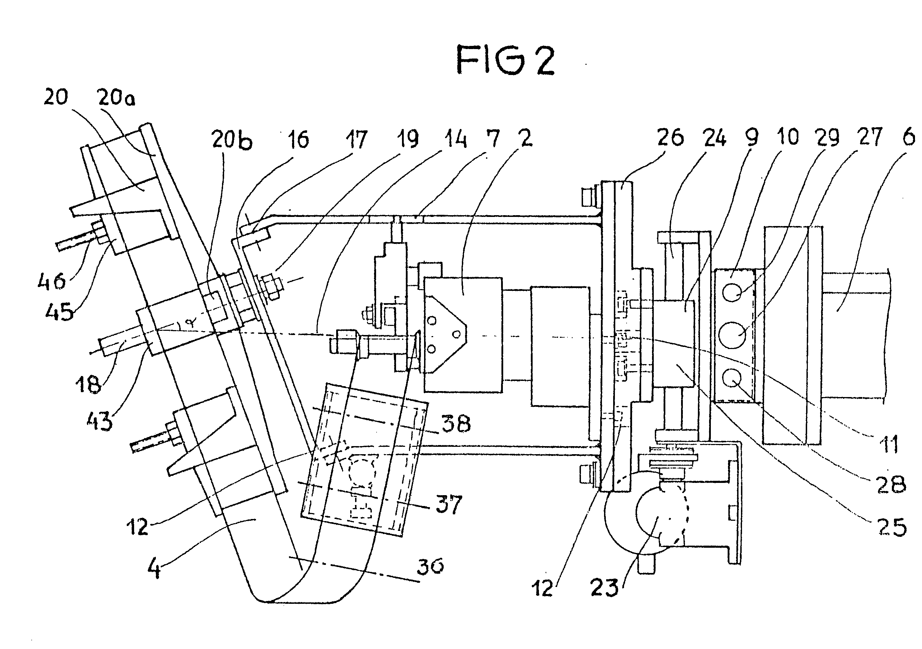

En se reportant aux figures 1 et 2, on voit que la tête de soudage 2 est fixée par l'intermédiaire de vis telles que 11 et 12 sur un support 7 lui-même fixé par l'intermédiaire de deux supports à glissière 9 et 10 sur l'extrémité d'un bras 6.

Le bras 6 réalisé sous forme d'une glissière est monté mobile en translation dans la direction de son axe et dans la direction verticale sur un support non représenté constitué par une potence permettant des déplacements verticaux de grande amplitude du bras 6 et des mouvements horizontaux dans la direction de l'axe 14 du bras par pas successifs d'une amplitude voisine de la largeur du feuillard.

La partie avant du support 7, c'est-à-dire la partie dirigée vers l'extrémité de l'élément de tuyauterie opposée à l'extrémité par laquelle on a fait pénétrer la tête de soudage dans la tuyauterie est constituée par une pièce d'extrémité 16 fixée à l'extrémité du support 7 par des vis 17 permettant un réglage en orientation de cette plaque par rapport au support 7 et donc par rapport au bras, pour le réglage en orientation d'un axe 18 fixé rigidement solidaire sur la plaque d'extrémité du support 7.

L'axe 18 est fixé sur le support 7 par un écrou 19 et porte la bobine 20 sur laquelle est enroulé le feuillard 4.

On voit donc que le réglage de l'orientation de la pièce d'extrémité du support 7 par rapport à ce support et au bras 6 permet un réglage d'orientation de la bobine 20 par rapport au bras 6.

Ce réglage d'orientation consiste pratiquement à faire tourner l'axe 18 de la bobine 20 autour de l'axe 14 du bras. Dans toutes ses positions, l'axe 18 fait un angle faible avec l'axe du bras.

Le réglage d'orientation permet d'obtenir une inclinaison des faces de la bobine variable, aussi bien par rapport au plan vertical qu'au plan horizontal passant par l'axe du bras. Ces angles d'inclinaison sont généralement différents de 90°.

Les supports à glissière 9 et 10 permettent d'autre part un réglage de la position de la tête de soudage et de la bobine par rapport au bras 6.

Le support à glissière 9 permet un réglage de la tête de soudage par rapport au bras suivant la direction transversale, c'est-à-dire suivant la direction horizontale perpendiculaire à l'axe du bras. Ce réglage peut être effectué grâce à un moteur 23 entraînant une vis 24 elle-même en prise avec le support 25 solidaire de la plaque de fixation 26 du support 7.

De même, le support à glissière 10 comportant deux colonnes de guidage 28 et 29 est entraîné en translation verticale par une vis 27 entraînée par un moteur.

De cette façon la position transversale et la position verticale de la tête de soudage et de la bobine 20 peuvent être réglées de façon précise à l'intérieur de la canalisation depuis le poste de commande de l'installation de revêtement.

La tête de soudage comporte une pièce d'extrémité 30 assurant le contact électrique avec le feuillard 4 lors de son application et de son soudage sur la surface interne 3 de la tuyauterie.

Au niveau de cette pièce d'extrémité 30, la tête de soudage comporte également deux godets de répartition de flux 31 au niveau de la zone en cours de soudage.

Ces godets sont alimentés en flux de soudage à partir d'un réservoir de flux sous pression d'air disposé à l'extrémité du bras opposée à celle portant la tête de soudage introduite dans la tuyauterie. Une tuyauterie permet d'amener le flux de soudage constitué par des particules à fort pourcentage de silicate dans les godets de répartition grâce à l'air comprimé qui effectue le transport des particules de flux.

La tête de soudage comporte également un couloir de guidage 32 du feuillard 4 et deux paires de galets d'entraînement 33 et 34 en prise sur le feuillard dans sa traversée dans la direction verticale de la tête de soudage. Les galets d'entraînement 33 et 34 sont reliés à un motoréducteur qui permet de les entraîner en rotation pour le déplacement du feuillard à l'intérieur de la tête de soudage.

A sa partie supérieure par laquelle arrive le feuillard 4, la tête de soudage comporte également un galet de déflection 35 permettant de guider le feuillard 4 à son entrée dans la tête de soudage.

Le dispositif d'alimentation en feuillard de la tête de soudage comporte, en dehors de la bobine 20 montée rotative sur l'axe 18, trois ensembles de galets de guidage 36, 37, et 38 montés sur des supports solidaires du support 7 de la tête de soudage et de la bobine 20 par l'intermédiaire d'axes 39, 40 et 41 autour desquels on peut orienter les ensembles de galets 36, 37 et 38 respectivement en fonction des caractéristiques dimensionnelles géométriques et élastiques du feuillard.

Le feuillard 4 passe entre les galets de chacun des ensembles de galets 36, 37 et 38.

La bobine 20 comporte deux bras à 90° tels que 20a et 20b représentés à la figure 2 solidaires d'un palier 43 tourillonnant sur l'axe 18. Chacun des bras 20a et 20b de la bobine porte une structure de maintien du feuillard 45 comportant des tiges 46 pour le réglage de cette structure de maintien en fonction de la largeur du feuillard à chacune de ses extrémités.

De cette manière, l'enroulement de feuillard est maintenu sur la bobine 20 et le feuillard 4 ne peut se dérouler que lorsqu'une traction est opérée sur l'extrémité de cette bande par les paires de galets d'entraînement 33 et 34 qui provoquent alors une mise en rotation de la bobine.

Le feuillard 4 est guidé depuis la partie inférieure 50 de la bobine 20 jusqu'à son arrivée sur le galet 35 constituant la partie supérieure de la tête de soudage par les trois ensembles de galets 36, 37 et 38.

Ces dispositifs de guidage sont placés de façon que le feuillard se déroule à partir de la zone 50 de la bobine. On voit sur les figures 1 et 2 que le feuillard 4 décrit une boucle dont la partie inférieure est tangente à la zone inférieure 50 de la bobine et dont la partie supérieure est tangente au plan vertical passant par l'axe 14 du bras 6.

L'orientation de la bobine opérée par réglage de la position de l'axe 18 ainsi que le réglage des ensembles de galets 36, 37 et 38 permettent de régler la forme de la boucle réalisée par le feuillard entre la bobine et la tête de soudage, en fonction des caractéristiques de ce feuillard.

En ce reportant à la figure 1, on voit que l'encombrement de l'ensemble de la tête de soudage et de la bobine dans un plan transversal est très faible par rapport à l'encombrement correspondant d'un dispositif où la bobine serait disposée au-dessus de la tête de soudage.

Au cours de l'opération de soudage du feuillard réalisant le revêtement intérieur de la tuyauterie 1, cette tuyauterie disposée avec son axe horizontal sur des galets moteurs 52 et 53 est mise en rotation autour de son axe à vitesse lente correspondant à la vitesse de soudage sur la surface interne 3.

Simultanément à cette mise en rotation de la canalisation, les galets d'entraînement 33 et 34 associés à la tête de soudage sont mis en rotation de façon à dérouler le feuillard à une vitesse linéaire permettant l'exécution du dépôt sur la surface interne de la tuyauterie. De cette façon le feuillard 4 passe dans la pièce d'extrémité 30 et est fondu sur la surface interne de la tuyauterie. Cette fusion s'effectue sous flux solide électroconducteur amené par les godets 31 dans la zone de soudage.

Lorsqu'un tour complet de la tuyauterie a été effectué, le mouvement de rotation de la tuyauterie et l'entraînement des galets d'entraînement 33 et 34 amenant le feuillard dans la zone de soudage sont interrompus simultanément.

On provoque alors un déplacement horizontal du bras 6 vers la zone de la tuyauterie non encore revêtue et l'on commence la passe suivante en provoquant à nouveau la mise en rotation de la tuyauterie 1 par l'intermédiaire des galets 52 et 53 et la mise en mouvement du feuillard par la mise en rotation des galets d'entraînement 33 et 34.

On effectue un déplacement horizontal du bras 6 d'une amplitude un peu inférieure à la largeur du feuillard de façon à provoquer un léger recouvrement des différents dépôts.

Par exemple dans le cas d'une tuyauterie pour réacteur nucléaire d'un diamètre de 660 mm qu'on revêt d'un feuillard d'acier inoxydable d'une largeur de 60 mm, le chevauchement des dépôts successifs est de 8 mm.

Au départ de l'opération de revêtement, on fait pénétrer l'extrémité du bras 6 portant la tête de soudage dans la tuyauterie par sa face d'entrée dirigée vers l'installation de revêtement après avoir réglé grossièrement la hauteur du bras sur son support.

Le positionnement précis de la tête de soudage en hauteur est réalisé ensuite grâce au support à glissière 10, cependant que le réglage transversal de la tête de soudage est réalisé grâce au support à glissière 9.

On voit que les avantages principaux du dispositif suivant l'invention sont que l'encombrement de ce dispositif et de la tête de soudage dans les directions transversales par rapport à l'axe de la canalisation sont réduits et que l'introduction du feuillard dans la tête de soudage peut se faire sans que le feuillard subisse des déformations ou des ruptures, le guidage de ce feuillard pouvant être réalisé de façon que la boucle constituant son trajet entre la bobine et la tête de soudage ait un rayon de courbure suffisamment grand, en fonction des caractéristiques géométriques et mécaniques du feuillard.

Mais l'invention ne se limite pas au mode de réalisation qui vient d'être décrit ; elle en comporte au contraire toutes les variantes. C'est ainsi qu'on peut imaginer un mode de fixation et des dispositifs de réglage de la position de la bobine et des dispositifs de guidage du feuillard différents de ceux qui viennent d'être décrits.

L'invention s'applique non seulement à une tête de soudage telle que celle qui a été décrite mais aussi à tout autre tête de soudage quel que soit le type d'amenée de courant et quel que soit le type de soudage réalisé.

D'autre part l'invention s'applique non seulement au cas du soudage d'un feuillard mais également au cas du soudage de tout autre produit long tel que par exemple un fil ou tout autre produit flexible long pouvant être transporté sur un trajet en forme de boucle avec passage d'un plan d'enroulement à une position décalée dans la direction perpendiculaire à ce plan d'enroulement.

L'invention s'applique non seulement au revêtement intérieur de canalisations utilisables dans le domaine de l'industrie nucléaire mais également au revêtement intérieur de toute tuyauterie ou autre pièce tubulaire utilisée dans quelque secteur de l'industrie que ce soit.

**Revendications**

1. Dispositif d'alimentation en produit long de recouvrement (4) d'une installation de revêtement interne de tuyauterie (1) ayant un diamètre de 650 à 1 000 mm, la tuyauterie étant disposée avec son axe horizontal sur un support permettant sa mise en rotation autour de cet axe, le dispositif comprenant un autre support sur lequel est monté mobile en translation verticale et horizontale un bras horizontal (6) dont une extrémité introduite dans la tuyauterie (1) pendant l'opération de revêtement porte une tête de soudage verticale (2) munie de moyens de guidage (32) et d'entraînement (33, 34) du produit long (4), dont le trajet dans la tête de soudage a une direction verticale jusqu'à sa mise en contact avec la surface interne (3) de la tuyauterie (1) pour son soudage sur cette surface, à la partie inférieure de la tuyauterie (1), lors de la rotation de la tuyauterie (1) autour de son axe horizontal, caractérisé par le fait qu'il comporte :

— une bobine (20) sur laquelle est enroulé le produit long (4), disposée à l'avant de la tête de soudage (2), c'est-à-dire vers la sortie de la tuyauterie (1) par l'entrée de laquelle est introduite la tête de soudage (2), la bobine étant montée rotative sur axe (18) solidaire de l'extrémité avant du bras (6) faisant un angle avec l'axe (14) du bras (6), et des moyens réglables (36, 37, 38) de guidage du produit long (4) depuis la zone de la bobine (20) située vers le bas jusqu'à la partie supérieure de la tête de soudage (2), suivant un parcours adapté à la largeur et à la flexibilité du produit long (4) se terminant par un trajet vertical pour l'introduction de ce produit long (4) dans les moyens de guidage et d'entraînement (33, 34) associés à la tête de soudage (2).

2. Dispositif d'alimentation suivant la revendication 1, caractérisé par le fait que le bras (6) comporte une pièce d'extrémité (16) sur laquelle est fixé rigidement l'axe (18) de la bobine (20), cette pièce d'extrémité (16) comportant des moyens de réglage (17) de son orientation par rapport au bras (6) pour faire varier l'orientation de la bobine (20) par rapport à la tête de soudage (2).

3. Dispositif d'alimentation suivant l'une quelconque des revendications 1 et 2, caractérisé par le fait que la bobine (20) est montée à l'extrémité du bras (6) par l'intermédiaire de glissières (9, 10) permettant de régler sa position verticale et sa position transversale.

4. Dispositif d'alimentation suivant l'une quelconque des revendications 1, 2 et 3, caractérisé par le fait que les moyens de guidage du produit long (4), dans le cas où ce produit long (4) est un feuillard, sont constitués par des jeux de galets (36, 37, 38) entre lesquels passe le feuillard pour son maintien et son guidage dans un parcours en forme de boucle entre la partie inférieure (50) de la bobine (20) et la partie supérieure de la tête de soudage (2).

## Claims

1. A device for feeding with a long covering product (4) an installation for the internal lining of pipework (1) having a diameter from 650 to 1000 mm, the pipework being arranged with its axis horizontal upon a support enabling it to be set in rotation about this axis, the device comprising another support upon which there is mounted so as to be movable in vertical and horizontal translation, a horizontal arm (6) one end of which, introduced into the pipework (1) during the lining operation, carries a vertical welding head (2) equipped with means of guiding (32) and of driving (33, 34) the long product (4) the path of which in the welding head has a vertical direction as far as its being put into contact with the inner surface (3) of the pipework (1) for welding it onto this surface at the bottom portion of the pipework (1) during the rotation of the pipework (1) about its horizontal axis, characterized by the fact that it includes :

— a reel (20) upon which the long product (4) is wound, arranged in front of the welding head (2), that is to say, towards the outlet from the pipework (1) through the entry to which the welding head (2) is introduced, the reel being mounted to be able to rotate about a spindle (18) integral with the front end of the arm (6) to make an angle with the axis (14) of the arm (6), and adjustable means (36, 37, 38) of guidance of the long product (4) from the zone of the reel (2) located towards the bottom up to the portion of the welding head (2) along a course suited to the width and flexibility of the long product (4), ending in a vertical path for the introduction of this long product (4) into the means of guiding and of driving (33, 34) associated with the welding head (2).

2. A device for feeding as in Claim 1, characterized by the fact that the arm (6) includes an endpiece (16) onto which the spindle (18) of the reel (20) is fixed rigidly, this endpiece (16) including means of adjustment (17) of its orientation with respect to the arm (6) in order to male the orientation of the reel (20) vary with respect to the welding head (2).

3. A device for feeding as in either of the Claims 1 and 2, characterized by the fact that the reel (20) is mounted at the end of the arm (6) by way of slides (9, 10) enabling its vertical position and its transverse position to be adjusted.

4. A device for feeding as in any one of the Claims 1, 2 and 3, characterized by the fact that the means of guiding the long product (4) in the case where this long product is a ribbon, consist of sets of rollers (36, 37, 38) between which the ribbon passes for holding and guiding it along a course in the form of a loop between the bottom portion (50) of the reel (20) and the top portion of the welding head (2).

## Ansprüche

1. Zufuhrvorrichtung für langstückiges Überzugsmaterial (4) für eine Anlage zur Innenverkleidung von Rohrleitungen (1) mit einem Durchmesser von 650-1 000 mm, wobei die Rohrleitung mit ihrer horizontalen Achse auf einem Träger angeordnet ist, der ihre Drehung um diese Achse zuläßt, und die Vorrichtung einen weiteren Träger umfaßt, auf welchem bewegbar in vertikaler und horizontaler Translation ein horizontaler Arm (6) montiert ist, dessen eines Ende, das während des Auskleidungsvorganges in die Rohrleitung (1) eingeführt wird, einen vertikalen Schweißkopf (2) trägt, der mit einer Führungseinrichtung (32) und Antriebseinrichtungen (33, 34) für das langstückige Material (4) versehen ist, dessen Bahn im Schweißkopf in vertikaler Richtung verläuft, bis es mit der Innenfläche (3) der Rohrleitung (1) in Berührung kommt, um auf dieser Fläche im unteren Abschnitt der Rohrleitung (1) bei der Drehung um ihre horizontale Achse verschweißt zu werden, dadurch gekennzeichnet, daß sie eine Spule (20) umfaßt, auf der das langstückige Material (4) aufgewickelt ist und die vor dem Schweißkopf (2), d.h. gegen den Auslaß der Rohrleitung (1) zu angeordnet ist, in deren Einlaß der Schweißkopf (2) eingeführt wird, wobei die Spule drehbar auf einer Achse (18) montiert ist, die fest mit dem Vorderende des Armes (6) verbunden ist und mit der Achse (14) des Armes (6) einen Winkel bildet, und daß eine einstellbare Führungseinrichtung (36, 37, 38) für das langstückige Material (4) von der im unteren Abschnitt der Spule (20) angeordneten Zone bis zum oberen Abschnitt des Schweißkopfes (2) entlang einer Bahn vorgesehen ist, die den Abmessungen und der Flexibilität des langstückigen Materials (4) angepaßt ist und in einen vertikalen Abschnitt ausläuft, um das langstückige Material (4) in die dem Schweißkopf (2) zugeordneten Führungs- und Antriebseinrichtungen (33, 34) einzuführen.

2. Zufuhrvorrichtung nach Anspruch 1, dadurch gekennzeichnet, daß der Arm (6) ein Endstück (16) aufweist, auf welchem starr die Achse (18) der Spule (20) befestigt ist und daß dieses Endstück (16) eine Einstellungseinrichtung (17) für seine Orientierung in bezug auf den Arm (6) aufweist, um die Ausrichtung der Spule (20) in bezug auf den Schweißkopf (2) verändern zu können.

3. Zufuhrvorrichtung nach einem der Ansprüche 1 und 2, dadurch gekennzeichnet, daß die Spule (20) am Ende des Armes (6) unter Zwischenschaltung von Gleitstützen bzw. Gleitführungen (9, 10) befestigt ist, die die Einstellung ihrer vertikalen Position und ihrer Querposition zulassen.

4. Zufuhrvorrichtung nach einem der Ansprüche 1, 2 und 3, dadurch gekennzeichnet, daß die Führungseinrichtungen für das langstückige Material (4), wenn als langstückiges Material (4) ein Bandstahl eingesetzt wird, aus Sätzen von Rollen (36, 37, 38) bestehen, zwischen welchen der Bandstahl zwecks seiner Halterung und Führung auf einer Bahn in Form einer Schleife zwischen dem unteren Abschnitt (50) der Spule (20) und dem oberen Teil des Schweißkopfes (2) durchläuft.

# FIG1

FIG 2